(19)

**Europäisches Patentamt**
**European Patent Office**
**Office européen des brevets**

(11) **EP 2 506 423 B1**

(12) **EUROPEAN PATENT SPECIFICATION**

(45) Date of publication and mention
of the grant of the patent:
**10.04.2019 Bulletin 2019/15**

(51) Int Cl.:
*H02P 29/024* (2016.01)    *H02P 3/22* (2006.01)

(21) Application number: **12152475.5**

(22) Date of filing: **25.01.2012**

(54) **Power Converting Device**

Leistungswandlungsvorrichtung

Dispositif de conversion d'alimentation

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2011 JP 2011073890
21.11.2011 JP 2011253436**

(43) Date of publication of application:
**03.10.2012 Bulletin 2012/40**

(73) Proprietor: **Hitachi Industrial Equipment Systems
Co., Ltd.
Tokyo (JP)**

(72) Inventors:
• **TakataA, Naoki**
  **Chiyoda-ku, Tokyo 100-8220 (JP)**
• **Ibori, Satoshi**
  **Chiyoda-ku, Tokyo 100-8220 (JP)**

(74) Representative: **Mewburn Ellis LLP
City Tower
40 Basinghall Street
London EC2V 5DE (GB)**

(56) References cited:
**JP-A- H 077 981      JP-A- H1 066 385
JP-A- H07 267 525**

EP 2 506 423 B1

## Description

The present invention relates to a voltage-type power converting device that controls driving of a motor, and a method of controlling a motor at a time of deceleration.

2) Description of the Related Art

Japanese Patent Applications Laid-open Nos. 7-7981 and 7-267525 are examples of the related art. An object of the former is to "miniaturize a power converting device and to reduce its cost by reducing the capacity of a braking resistor installed at the DC intermediate circuit of a voltage-type power converting device for driving an induction motor and eliminating its need.

According to the technique, a "regenerated power detector for detecting the regenerated power from an induction motor to be absorbed by a capacitor via an inverter is provided, the detection signal by the detector is added to a function generator in an inverter control circuit, and then a voltage command compensation value to be added to the inverter output voltage command value on power running generated by a voltage command generator is calculated and generated by the function generator. Further, the ratio of an inverter output voltage command value against a frequency on braking control is made larger than the value on the power running to excessively excite the motor and then decelerate the motor due to an increase in the internal heat loss."

The latter aims to "dispense with any resistance for regenerated power consumption or design such a resistance with a minor capacity by switching the inverter output voltage stabilization control in the regeneration mode, and thereby decreasing the amount of regenerated power." According to the technique, an "elevator device involves a stabilization control of inverter output voltage to be made by a CPU which calculates an output voltage command. When the detected value of a DC voltage detecting circuit in the main circuit exceeds the reference value of main circuit DC voltage, the CPU judges the operation is in the regeneration mode of elevator system, cancels the stabilization control of the output voltage, calculates the output voltage command according to a calculation method and controls the output voltage of the inverter. By this control, the magnetizing current of a motor IM increases when the main circuit voltage is increased by the regenerated power in the regeneration mode, and a power loss in the motor increases while the amount of regenerated power decreases, so that it is practicable to dispense with any resistance R1 for regenerated power consumption or design such a resistance with a minor capacity."

Because the techniques disclosed in Japanese Patent Applications Laid-open Nos. 7-7981 and 7-267525 involve operations of increasing power consumption of a motor by increasing an output voltage irrespective of an allowable power capacity of a connected regenerative braking resistor, there are problems that a loss of the motor is increased carelessly even when the regenerative braking resistor still has an allowance, and that a resistor consumes power higher than the allowable power capacity of the regenerative braking resistor.

JPH07267525 discloses an elevator device that involves a stabilization control of inverter output voltage to be made by a CPU which performs computation of an output voltage command using the computing system according to the equation $Vs=Vsref*Vdcref/Vdcdet$, where Vsref is reference output voltage command, Vdcref is reference DC voltage, and Vdcdect is sensed DC voltage. When the sensed value of a DC voltage sensing circuit in the main circuit 2 exceeds the reference value of main circuit DC voltage, the CPU passes judgement that the operation is in the regeneration mode of elevator system, disengages the stabilization control of the output voltage, computes the output voltage command according to a further equation as $Vs=Vsref$, and controls the output voltage of the inverter. By this control, the magnetizing current of a motor IM increases when the main circuit voltage is raised by the regenerated power in the regeneration mode, and power loss in the motor increases while the amount of regenerated power decreases, so that it is practicable to dispense with any resistance R1 for regenerated power consumption or design such a resistance with a minor capacity.

A preferred aim of the present invention is to provide a power converting device that can effectively use a power capacity consumed by a pre-connected regenerative braking resistor by automatically adjusting a voltage output to a motor and deceleration time according to an allowable power capacity of the regenerative braking resistor, and its resistance.

According to an aspect of the present invention there is provided a power converting device according to claim 1.

The present invention can provide a power converting device that appropriately adjusts power consumed by a regenerative braking resistor at a time of deceleration by changing a voltage output to a motor according to the allowable power capacity of the regenerative braking resistor, and its resistance.

These and other features of the present invention will become readily apparent when considered in reference to the following detailed description when taken in conjunction with the accompanying drawings.

Preferred embodiments of the present invention will be described in detail based on the followings, wherein:

Fig. 1 is a block diagram showing a first embodiment;
Fig. 2 is a flowchart showing the process according to the first embodiment;

Fig. 3 is an exemplary operation timing chart according to the first embodiment;
Fig. 4 is an exemplary operation timing chart not according to embodiments of the present invention;
Fig. 5 is a flowchart showing the process according to a second embodiment; and
Fig. 6 is an exemplary operation timing chart according to the second embodiment.

First Embodiment

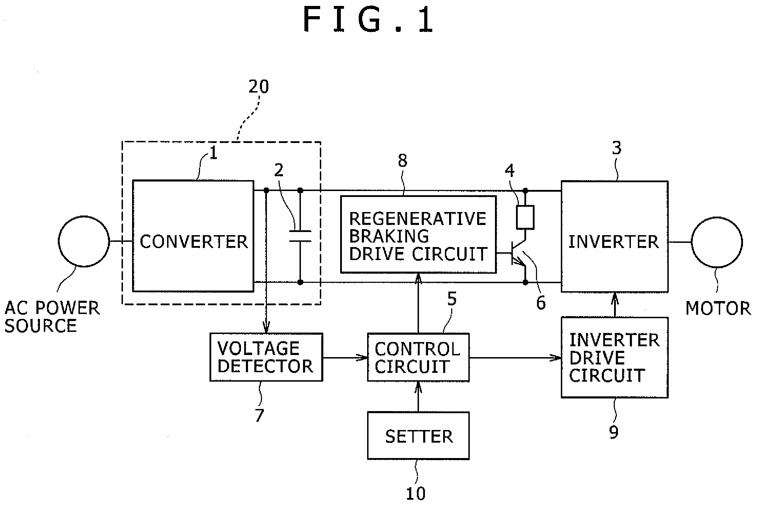

Fig. 1 is a diagram showing a configuration according to the first embodiment. A converter 1 and a capacitor 2 rectify power from an AC power source and convert an AC voltage to a DC voltage. An inverter 3 converts the DC voltage into a required AC voltage, and outputs it to a motor. A transistor 6 is a switch for operating a regenerative braking resistor 4. In the regenerative operation state at a time of deceleration of the motor, when energy is regenerated to the inverter 3, the transistor 6 switches on the regenerative braking resistor 4 which then consumes the regenerated energy as heat.

A voltage detector 7 constantly monitors a voltage of a DC unit 20, and sends a DC voltage signal Vpn to a control circuit 5. A setter 10 sets an output frequency of the inverter 3 and the like, and sends various set values to the control circuit 5. A memory control unit (MCU, not shown) implemented in the control circuit 5 operates the regenerative braking resistor 4, and performs various calculations including pulse width modulation (PWM) calculation based on a DC voltage signal and set values, and sends operation signals to a regenerative braking drive circuit 8 and an inverter drive circuit 9. The regenerative braking drive circuit 8 and the inverter drive circuit 9 drive the regenerative braking resistor transistor 6 and the inverter 3 respectively, based on operation signals from the control circuit 5.

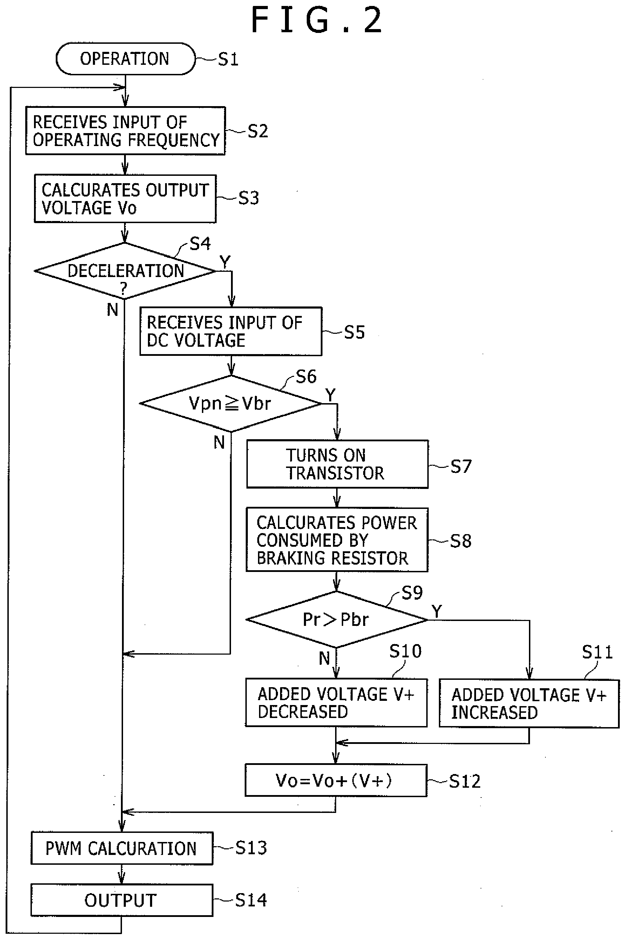

Fig. 2 is a flowchart showing the process according to the first embodiment. When it receives an operation command (S1) and receives an input of an operating frequency (S2) from the setter 10, operation starts. An output voltage $V_0$ is calculated based on the operating frequency (S3).

The MCU implemented in the control circuit 5 calculates and outputs the output operating frequency and the output voltage $V_0$ based on the input value of the operating frequency received from the setter 10. Therefore, the MCU accurately recognizes whether the motor is accelerated, operated at a constant speed, or decelerated based on the output operating frequency.

When the MCU implemented in the control circuit 5 judges the motor is not decelerated, the control circuit 5 performs PWM calculation based on the operating frequency and the output voltage $V_0$ (S13), and the inverter drive circuit 9 drives the inverter 3 to output a required AC voltage (S14).

When the MCU implemented in the control circuit 5 judges the motor is decelerated, the control circuit 5 receives an input of a DC voltage Vpn from the voltage detector 7 (S5), and compares the DC voltage Vpn with a pre-set operation voltage Vbr of the regenerative braking circuit (S6). When the MCU implemented in the control circuit 5 judges Vpn<Vbr, as in the case where the MCU implemented in the control circuit 5 judges the motor is not decelerated, the MCU performs PWM calculation (S13), and then a required AC voltage is output to the motor (S14).

When the MCU implemented in the control circuit 5 judges Vpn≥Vbr, an operation signal is sent to the regenerative braking drive circuit 8, and the transistor 6 is turned on (S7). Thereafter, the MCU implemented in the control circuit 5 calculates power Pbr consumed by the connected regenerative braking resistor 4 based on the pre-set resistance R of the regenerative braking resistor 4 and Vbr (S8).

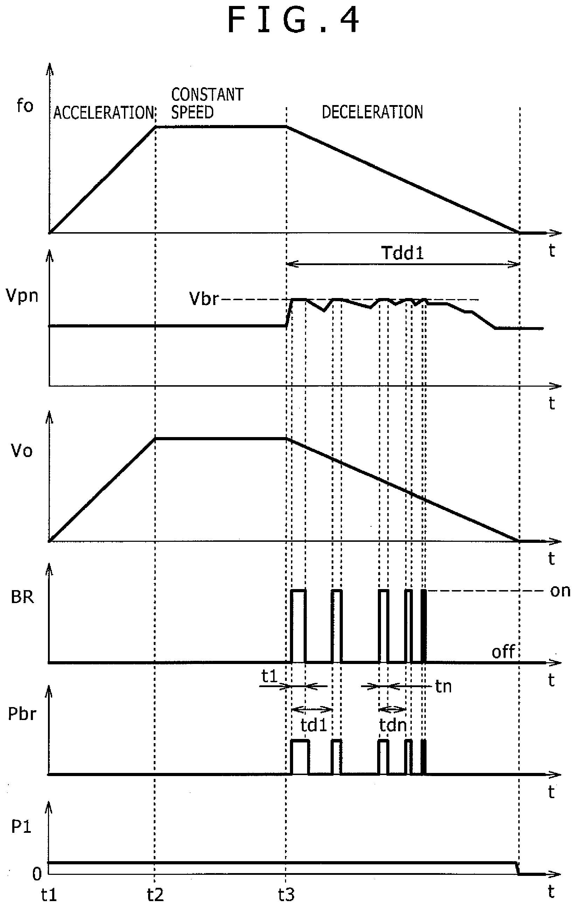

As shown in Fig. 4, the power Pbr1 consumed by the regenerative braking resistor 4 is expressed with the following formula:

$$\text{(Formula 1)}$$

$$\text{Pbr1}=(\text{Vb}^2/\text{R})*\text{t1}/\text{td1}$$

In the formula, Vb is an applied voltage of the regenerative braking resistor 4, t1 is the time during which the regenerative braking drive circuit 8 shown in Fig. 1 is operated, and td1 is the time until the regenerative braking drive circuit 8 is operated next.

To calculate the power Pbr1 consumed by the regenerative braking resistor 4 accurately, the DC voltage Vpn minus a voltage drop ΔV of the discharge resistance switching transistor 6 (Vb=Vpn-ΔV) is used, and these results in the following formula:

$$\text{(Formula 2)}$$

$$\text{Pbr1}=\{(\text{Vpn}-\Delta\text{V})^2/\text{R}\}*\text{t1}/\text{td1}$$

The voltage drop ΔV of the switching transistor 6 at a time of conduction is generally approximately 1 to 3V. This is very small compared to a DC voltage Vpn (several hundreds V) and is negligible.

Accordingly, the power Pbr1 and Pbrn consumed by the regenerative braking resistor 4 are obviously calculated as follows:

$$(Formula\ 3)$$

$$Pbr1 = \{(Vpn - \Delta V)^2/R\} * t1/td1$$

$$\approx (Vpn^2/R) * t1/td1 (\because Vpn - \Delta V \approx Vpn)$$

$$Pbrn \approx (Vpn^2/R) * tn/tdn (\because Vpn - \Delta V \approx Vpn)$$

Also, the total power Pbr consumed by the regenerative braking resistor 4 until the motor stops is expressed by the following formula:

$$(Formula\ 4)$$

$$Pbr \approx (Vpn^2/R) * \sum (tn/tdn)$$

In the formula, power consumed by the regenerative braking resistor 4 may be calculated as Pbrn every time and compared with an allowable power capacity Pr, or alternatively may be calculated as the total power Pbr and compared with the allowable power capacity Pr. The intent of the present invention is not affected at all even if the power Pbrn or Pbr consumed by the regenerative braking resistor 4 is calculated by subtracting the voltage drop ΔV of the discharge resistance switching transistor 6 from the DC voltage Vpn.

It is also possible to obtain the power Pbr consumed by the regenerative braking resistor 4 with the following formula by detecting an effective value Irms of the current through the regenerative braking resistor 4.

$$(Formula\ 5)$$

$$Pbr1 = (Irms^2 * R) * t1/td1$$

$$Pbr1 = (Irms^2 * R) * \sum (tn/tdn)$$

The power Pbr consumed by the regenerative braking resistor 4 can be calculated by using either the DC voltage Vpn or the effective value Irms of the current.

Furthermore, $\sum$tdn may be substituted with deceleration time of the inverter 3 which is previously set by the setter 10.

Although the power Pbr consumed by the regenerative braking resistor 4 is calculated using the voltage Vpn in the present embodiment, any value other than the voltage Vpn may be employed.

Next, the pre-set allowable power capacity Pr and Pbr of the connection regenerative braking resistor 4 are compared with each other (S9). When the MCU implemented in the control circuit 5 judges Pr>Pbr, an added voltage V+ is increased (S11), and when the MCU implemented in the control circuit 5 judges Pr≤Pbr, the added voltage V+ is decreased (S10). Thereafter, the added voltage V+ is added $\{V_0+(V+)\}$ or subtracted $\{V_0-(V+)\}$ to or from the output voltage $V_0$ (S12), and S13 and S14 are executed to output a required AC voltage from the inverter 3.

If the allowable power capacity Pr of the connection regenerative braking resistor 4 is previously set as the allowable power of the regenerative braking resistor 4 via the setter 10, the output voltage $V_0$ of the inverter 3 is controlled automatically so that the power Pbr consumed by the connection regenerative braking resistor 4 remains equal to or less than Pr.

When the added voltage V+ is added to the output voltage $V_0$ $\{V_0+(V+)\}$, the output terminal voltage of the motor becomes larger by the added voltage V+, and accordingly a power loss consumed by a wire wound resistor in the motor and the like becomes larger.

When the added voltage V+ is added to the output voltage $V_0$ $\{V_0+(V+)\}$ (S11), the motor is excessively excited, and both the power consumed by the wire wound resistor in the motor and the like (a loss generated in the motor) and the power consumed by the regenerative braking resistor 4 increase.

In other words, because the regenerated power from the motor minus the power consumed by the wire wound resistor in the motor and the like is returned to the inverter 3 from the motor terminal, and only the regenerated power minus the power consumed by the wire wound resistor in the motor and the like has to be consumed by the regenerative braking resistor 4.

That is, by adding the added voltage V+ to the output voltage $V_0$ of the motor $\{V_0+(V+)\}$ according to the power capacity of the regenerative braking resistor 4 and its resistance at a time of deceleration, it becomes possible to decrease the power capacity Pr of the regenerative braking resistor 4 by the power consumed by the wire wound resistor in the motor and the like.

With this operation, because the output voltage $V_0$ of the regenerated energy at a time of deceleration is automatically adjusted according to the set allowable power capacity Pr of the regenerative braking resistor 4, the regenerated energy can be sufficiently effectively used within the allowable power capacity Pr of the regenerative braking resistor 4.

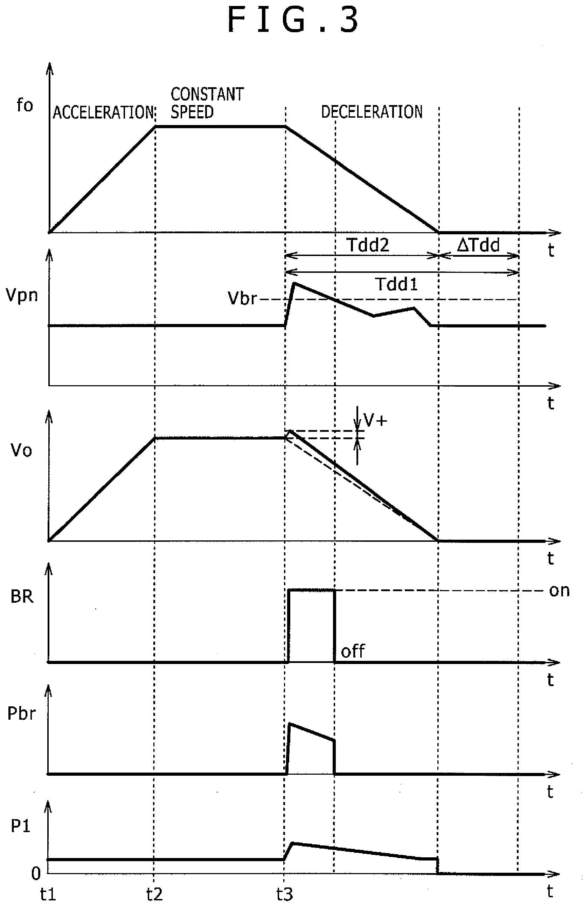

Fig. 3 is an exemplary operation timing chart according to the present embodiment, and Fig. 4 is an exemplary operation timing chart not according to the present embodiment. In these examples, the output frequency of the inverter 3 is shown in the order of that at a time of acceleration, operation at constant speed, and deceleration.

First, an operation not according to the present embodiment will be explained referring to the timing chart of Fig. 4. At t1, the setter 10 receives an operation command, and the motor starts to be accelerated. At t2, a target operation frequency is reached, and the motor is operated at a constant speed. At t3, the setter 10 receives a stop command, and when the motor starts to be decelerated, it starts a generator operation, and the DC voltage between both terminals Vpn of the capacitor increases due to a regenerated power from the motor. When Vpn exceeds the pre-set regenerative braking circuit operating voltage Vbr, the discharge resistance switching transistor 6 operates, and the regenerative braking resistor 4 consumes the regenerated power as heat so that an increase in Vpn is suppressed while the motor is decelerated.

Such a state that the discharge resistance switching transistor 6 operates and the regenerative braking resistor 4 consumes the regenerated power as heat, is as a whole termed a regenerative braking resistor operation, and is hereinafter abbreviated as BR.

Because the power of the motor is in proportion to the product of a rotation number and a torque ($P \propto N*T$), the power is in proportion to the frequency when the deceleration torque is constant.

Because in this manner of control, the power Pl consumed in the motor at a time of deceleration is almost constant irrespective of the frequency, the power Pbr consumed by the regenerative braking resistor 4 is larger when the frequency is high (the rotation number is high), and becomes smaller with a decrease in the frequency.

Next, the present embodiment will be explained referring to Fig. 3.

When the motor starts to be decelerated and BR starts at t3, the operation is the same with that not according to the present embodiment until the regenerative braking resistor 4 consumes the regenerated power as heat, but S8 and the following steps in the flowchart of Fig. 2 are executed in the present embodiment, and a voltage is added to the output voltage $V_0$ according to the power consumption Pbr of the regenerative braking resistor 4 and the pre-set allowable power capacity Pr of the regenerative braking resistor 4.

In other words, when the calculated power Pbr consumed by the regenerative braking resistor 4 is compared with and smaller than the allowable power capacity Pr of the regenerative braking resistor 4 previously set by the setter 10 (Pr>Pbr), V+ is added to the output voltage $V_0$ $\{V_0+(V+)\}$, and the inverter 3 outputs a required AC voltage.

This added voltage V+ corresponds to a solid line added to the inverter output voltage $V_0$ (dotted line) during deceleration at t3 and thereafter in Fig. 3.

In the present embodiment, the added voltage V+ is made smaller with a decrease in the output frequency at a time of deceleration, but is dependent on the capacity and the load factor of the motor, and the allowable power capacity Pr of the regenerative braking resistor 4. The intent of the present invention is not affected at all even if the added voltage V+ is a certain constant value, and is added with a decrease in the output frequency.

This results in an increase in the terminal voltage of the motor, and the motor being excessively excited; therefore, the power Pl consumed in the motor (the power loss consumed by the wire wound resistor in the motor and the like) increases, and the regenerated power minus the power Pl is power regenerated to the inverter 3 from the motor terminal, and only this power has to be consumed by the regenerative braking resistor 4.

In other words, to effectively use the allowable power capacity Pr of the regenerative braking resistor 4, because the power Pl of the regenerated power is consumed as heat in the motor, the deceleration time of the motor is Tdd2, and is shorter as compared with that in Fig. 4 by $\Delta$Tdd; therefore, the cycle time of production facilities such as conveyors can be shortened, thereby improving the productivity.

On the other hand, when the deceleration time Tdd2 in Fig. 3 is made the same with the deceleration time Tdd 1 in Fig. 4, if the added voltage V+ is added to the output voltage $V_0$ (S11), the motor is excessively excited, and the power consumed by the wire wound resistor in the motor and the like (a loss generated in the motor) increases. Accordingly, the regenerated power from the motor minus the increased power consumed by the wire wound resistor in the motor and the like is returned to the inverter 3 from the motor terminal, and only the regenerated power minus the power consumed by the wire wound resistor in the motor and the like has to be consumed by the regenerative braking resistor 4; therefore, the regenerative braking resistor 4 having the allowable power capacity Pr that is smaller by that amount can be used, and the size of the resistor can be made smaller.

In the present embodiment, the power Pbr consumed by the regenerative braking resistor 4 is calculated based on the pre-set resistance R of the regenerative braking resistor 4 and an input value of the DC voltage Vpn, and is compared with the pre-set allowable power capacity Pr of the regenerative braking resistor 4. When the power Pbr is less than the allowable power capacity Pr (Pr>Pbr), the output voltage $V_0$ is increased. By increasing the voltage to be applied to the motor, the motor is excessively excited, and the power loss in the motor increases. Accordingly, when the output voltage $V_0$ is increased $\{V_0+(V+)\}$ while the regeneration circuit is being operated, the power consumed by the wire wound resistor in the motor and the like of the regenerated power increases, and the motor bears the load of a part of the regenerated power as heat; as a result, the power returning to the inverter 3 from the motor terminal decreases, and the power that has to be consumed by the regenerative braking resistor 4 decreases. By changing the output voltage $V_0$ with this method using this action, the power consumption Pbr of the regenerative braking resistor 4 can be controlled.

Accordingly, if the resistance R and the allowable power capacity Pr of the regenerative braking resistor 4 are previously set, the power can be used efficiently within the allowable power capacity Pr of the regenerative braking resistor 4, and overheating due to overload of the regenerative braking resistor 4 and the like can be prevented from happening.

Second Embodiment

When an increase in the output voltage $V_0$ is too large, the amount of heat generated by the motor is larger, and the motor itself may burn out. Accordingly, a certain limitation should be placed on the added voltage V+ according to characteristics of the motor.

When the regeneration is too large, and the output voltage $V_0$ reaches the limit value in the first embodiment, the regenerative braking resistor 4 cannot consume the entire regenerated power, the voltage Vpn of the DC unit 20 increases, and these results in the inverter 3 stopping for protection from overvoltage.

The regenerative braking resistor 4 generally has a built-in temperature sensor, and when it consumes an excessive amount of regenerated power as heat, the temperature of resistive elements increases rapidly, and the temperature sensor operates to stop the transistor 6 for protecting the regenerative braking resistor 4 from abnormal heating. For this reason, when the regenerative braking resistor 4 cannot consume the entire regenerated heat, the transistor 6 is stopped. Accordingly, the voltage of the DC unit 20 increases further, and finally the inverter 3 is stopped for protection from the overvoltage.

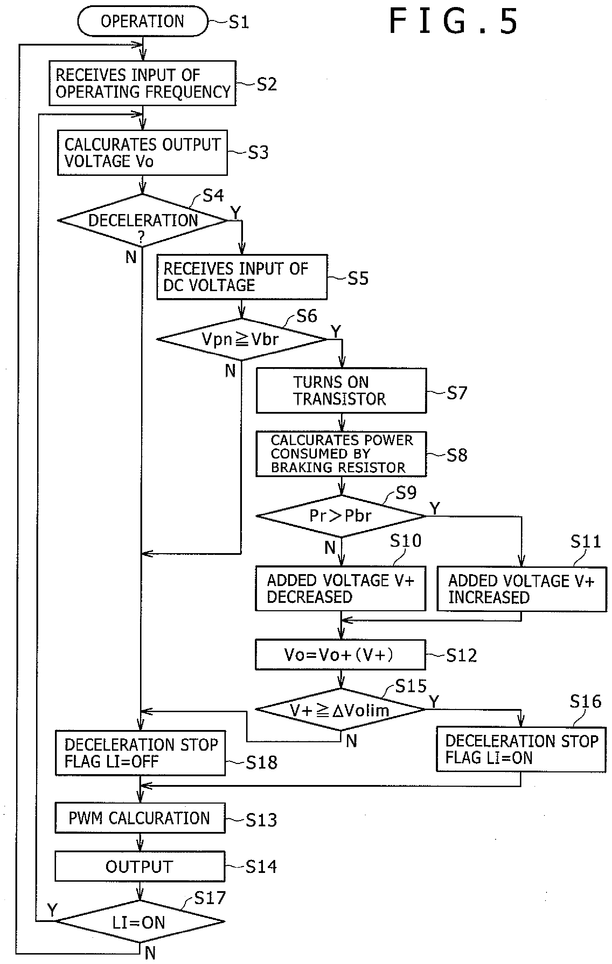

Even in such a case, protection from overvoltage can be avoided with the process shown in the flowchart of Fig. 5.

The operations up to S12 are the same with those in the first embodiment, but a limit value is previously set for the output voltage $V_0$, and V+ and $\Delta V_0$lim are compared with each other (S15). In the case of V+<$\Delta V_0$lim, a deceleration stop flag L1 is turned off (S18), and in the case of V+≥$\Delta V_0$lim, the deceleration stop flag L1 is turned on (S16). Following output performed at S13 and S14, when the deceleration stop flag L1 is turned off, the motor continues to be decelerated according to the operating frequency, and when the deceleration stop flag L1 is turned on, another operating frequency is not input, the ongoing operating frequency is maintained (temporarily stopped), and the AC voltage is output.

With the above-described process, a limit value can be set for the added voltage V+ of the output voltage $V_0$ (V+<$\Delta V_0$lim); thereby, when the output voltage $V_0$ increases at a time of deceleration, and the added voltage V+ exceeds the pre-set limit value $\Delta V_0$lim, deceleration can be temporarily stopped. When deceleration is temporarily stopped, the regenerated power due to deceleration decreases, and the DC voltage Vpn lowers so that deceleration is resumed.

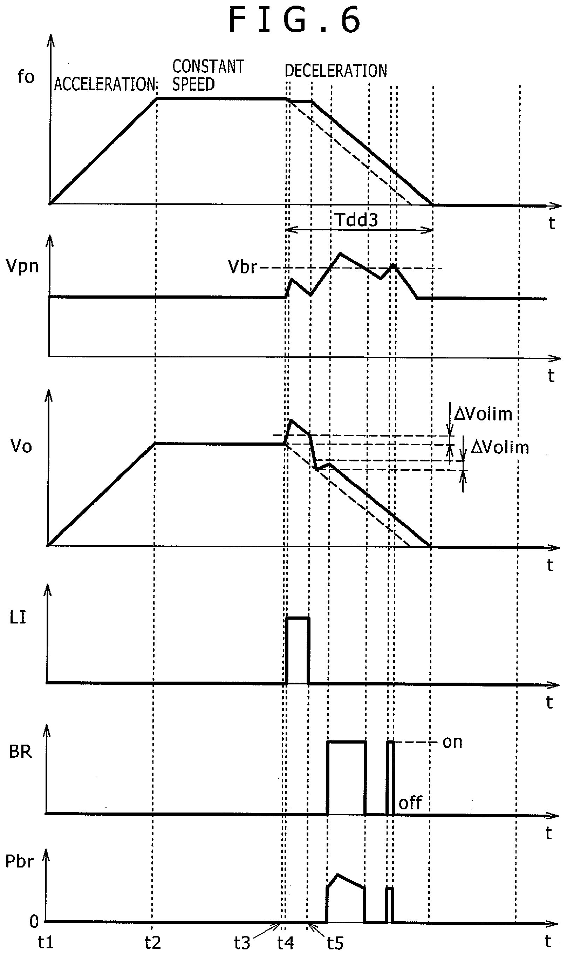

Fig. 6 is an exemplary operation timing chart according to the present embodiment. Although the operations up to t4 are the same with those of the first embodiment, when deceleration starts, BR starts and $V_0$ increases, and an increase in $V_0$ (added voltage V+) becomes equal to or larger than the limit value $\Delta V_0$lim at t4 (added voltage V+≥$\Delta V_0$lim), then deceleration temporarily stops. Thereafter, when the added voltage V+ becomes less than the limit value $\Delta V_0$lim at t5 (added voltage V+<$\Delta V_0$lim), deceleration is resumed, and when the added voltage V+ becomes equal to or larger than $\Delta V_0$lim (added voltage V+≥$\Delta V_0$lim), deceleration is temporarily stopped. These operations are repeated to execute deceleration continuously.

As a result, the motor can be decelerated to stop in deceleration time Tdd3 which is shorter than the deceleration time Tdd1 in Fig .4

This enables efficient use of the power consumption Pbr with the regenerative braking resistor 4 within the allowable power capacity Pr while avoiding excessive excitation of the motor due to excessive application of a voltage. Also, the motor can be decelerated and stopped without the inverter 3 entering the overvoltage protection operation.

The intent of the present invention is not affected at all even if the limit value $\Delta V_0$lim is variable depending on a decrease in the output frequency at a time of deceleration, or constant irrespective of a decrease in the output frequency.

Embodiments of present invention are not limited to those described above, but include various variations.

The above-described embodiments have been explained in detail so that the present invention can be understood easily, and the present invention is not necessarily limited to the embodiments that include all the configurations explained above.

A part of the configuration of an embodiment may be replaced with a configuration of another embodiment, and a configuration of an embodiment may be added to a configuration of another embodiment.

A part of the configuration of each embodiment may be an addition of a configuration of another embodiment, may be eliminated, or may be replaced with a configuration of another embodiment.

A part or entirety of each configuration, function, processing unit, processing means and the like may be realized by hardware by, for example, designing it in an integrated circuit.

Each configuration, function, and the like may be realized by software that reads a program that realizes each function by a MCU, and executes it.

Control lines and information lines that are necessary for explanation are mentioned, but those that are necessary for materializing the present invention as a product are not necessarily mentioned. It is allowed to assume that almost all the configurations are actually connected with each other.

As described above, according to embodiments of the present invention, when the power converting device is used to drive the motor, the regenerated power generated when the motor is decelerated can be used effectively with the connected regenerative braking resistor 4 within the allowable power capacity Pr.

## Claims

1. A power converting device comprising:

   a regenerated power consumption circuit,
   a regenerative braking resistor (4) and a switch (6) for operating the regenerative braking resistor (4); and
   an inverter (3);
   wherein the regenerative braking resistor (4) and the switch (6) are in parallel to a DC side of the inverter (3);
   wherein the inverter (3) converts a DC voltage into a required AC voltage, and outputs the required AC voltage to an induction motor;
   wherein the power converting device further comprises a control unit (5),
   wherein the control unit (5) calculates a power consumption value of the regenerative braking resistor (4) based on an operation amount of the regenerated power consumption circuit, and controls a voltage output to the induction motor at a time of deceleration according to the calculated power consumption value,
   **characterized in that** the control unit (5) compares the calculated power consumption value of the regenerative braking resistor (4) with a pre-set allowable power capacity of the regenerative braking resistor (4), and performs control so that when the power consumption value is smaller than the allowable power capacity, the voltage output to the induction motor is increased to excessively excite the induction motor, and when the power consumption value is equal to or larger than the allowable power capacity, the voltage output to the induction motor is decreased.

2. The power converting device according to claim 1, wherein, in performing the control of the voltage output to the induction motor, the control unit (5) stops deceleration of the induction motor temporarily when an increase or a decrease in the voltage is equal to or larger than a pre-set upper limit of an increase or a decrease in the voltage output to the induction motor.

## Patentansprüche

1. Leistungswandlungsvorrichtung, die Folgendes umfasst:

   eine regenerierte Leistungsverbrauchsschaltung,
   einen regenerativen Bremswiderstand (4) und einen Schalter (6) zum Betreiben des regenerativen Bremswiderstands (4); und
   einen Wechselrichter (3);
   wobei der regenerative Bremswiderstand (4) und der Schalter (6) parallel zu einer Gleichstrom-Seite des Wechselrichters (3) sind;

wobei der Wechselrichter (3) eine Gleichspannung in eine erforderliche Wechselspannung umwandelt und die erforderliche Wechselspannung an einen Induktionsmotor ausgibt;

wobei die Leistungswandlungsvorrichtung weiters eine Steuereinheit (5) umfasst,

wobei die Steuereinheit (5) einen Leistungsverbrauchswert des regenerativen Bremswiderstands (4) auf Basis eines Betriebsausmaßes der regenerierten Leistungsverbrauchsschaltung berechnet und eine Spannungsausgabe an den Induktionsmotor zum Zeitpunkt einer Verzögerung gemäß dem berechneten Leistungsverbrauchswert steuert,

**dadurch gekennzeichnet, dass** die Steuereinheit (5) den berechneten Leistungsverbrauchswert des regenerativen Bremswiderstands (4) mit einer voreingestellten zulässigen Leistungsfähigkeit des regenerativen Bremswiderstands (4) vergleicht und eine Steuerung durchführt, sodass, wenn der Leistungsverbrauchswert kleiner als die zulässige Leistungsfähigkeit ist, die Spannungsausgabe an den Induktionsmotor erhöht wird, um den Induktionsmotor exzessiv zu erregen und, wenn der Leistungsverbrauchswert gleich wie oder größer als die zulässige Leistungsfähigkeit ist, die Spannungsausgabe an den Induktionsmotor verringert wird.

2. Leistungswandlungsvorrichtung nach Anspruch 1, wobei bei der Durchführung der Steuerung der Spannungsausgabe an den Induktionsmotor die Steuereinheit (5) die Verzögerung des Induktionsmotors vorübergehend unterbricht, wenn eine Erhöhung oder Verringerung in der Spannung gleich oder größer als eine voreingestellte Obergrenze einer Erhöhung oder Verringerung der Spannungsausgabe an den Induktionsmotor ist.

**Revendications**

1. Dispositif de conversion d'énergie comprenant :

un circuit de consommation d'énergie récupérée,

une résistance de freinage par récupération (4) et un commutateur (6) pour actionner la résistance de freinage par récupération (4) ; et

un onduleur (3) ;

dans lequel la résistance de freinage par récupération (4) et le commutateur (6) sont en parallèle avec un côté DC de l'onduleur (3) ;

dans lequel l'onduleur (3) convertit une tension DC en une tension AC requise, et délivre en sortie la tension AC requise dans un moteur à induction ;

dans lequel le dispositif de conversion d'énergie comprend en outre une unité de commande (5),

dans lequel l'unité de commande (5) calcule une valeur de consommation d'énergie de la résistance de freinage par récupération (4) sur la base d'une quantité opérationnelle du circuit de consommation d'énergie récupérée, et commande une tension délivrée en sortie au moteur à induction à un moment de décéleration en fonction de la valeur de consommation d'énergie calculée,

**caractérisé en ce que** l'unité de commande (5) compare la valeur de consommation d'énergie calculée de la résistance de freinage par récupération (4) à une capacité d'énergie admissible préétablie de la résistance de freinage par récupération (4), et effectue une commande de sorte que, lorsque la valeur de consommation d'énergie est inférieure à la capacité d'énergie admissible, la tension délivrée en sortie au moteur à induction est augmentée pour exciter excessivement le moteur à induction, et lorsque la valeur de consommation d'énergie est égale ou supérieure à la capacité d'énergie admissible, la tension délivrée en sortie au moteur à induction est diminuée.

2. Dispositif de conversion d'énergie selon la revendication 1, dans lequel, en effectuant la commande de la tension délivrée en sortie au moteur à induction, l'unité de commande (5) arrête temporairement une décélération du moteur à induction lorsqu'une augmentation ou une diminution de la tension est supérieure ou égale à une limite supérieure préétablie d'une augmentation ou d'une diminution de la tension délivrée en sortie au moteur à induction.

FIG. 1

MOTOR

INVERTER — 3

INVERTER DRIVE CIRCUIT — 9

4

6

REGENERATIVE BRAKING DRIVE CIRCUIT — 8

CONTROL CIRCUIT — 5

SETTER — 10

VOLTAGE DETECTOR — 7

2

20

CONVERTER — 1

AC POWER SOURCE

# F I G . 2

OPERATION —S1

RECEIVES INPUT OF OPERATING FREQUENCY —S2

CALCURATES OUTPUT VOLTAGE Vo —S3

DECELERATION ? —S4

RECEIVES INPUT OF DC VOLTAGE —S5

$Vpn \geqq Vbr$ —S6

TURNS ON TRANSISTOR —S7

CALCURATES POWER CONSUMED BY BRAKING RESISTOR —S8

$Pr > Pbr$ —S9

ADDED VOLTAGE V+ DECREASED —S10

ADDED VOLTAGE V+ INCREASED —S11

$Vo = Vo + (V+)$ —S12

PWM CALCURATION —S13

OUTPUT —S14

FIG.3

11

# F I G . 4

FIG.5

```
           ( OPERATION )──S1

    ┌────────────────────────┐
    │ RECEIVES INPUT OF      │──S2
    │ OPERATING FREQUENCY    │
    └────────────────────────┘

       ┌──────────────────┐
       │ CALCURATES OUTPUT │──S3
       │ VOLTAGE Vo        │
       └──────────────────┘

              ◇ DECELERATION ? ◇──S4
              N │            Y │

                      ┌──────────────────┐
                      │ RECEIVES INPUT OF │──S5
                      │ DC VOLTAGE        │
                      └──────────────────┘

                         ◇ Vpn≧Vbr ◇──S6
                         N │      Y │

                              ┌──────────────┐
                              │ TURNS ON     │──S7
                              │ TRANSISTOR   │
                              └──────────────┘

                          ┌────────────────────┐
                          │ CALCURATES POWER    │──S8
                          │ CONSUMED BY         │
                          │ BRAKING RESISTOR    │
                          └────────────────────┘

                                ◇ Pr>Pbr ◇──S9
                                N │      Y │

   S10                                        S11
   ┌──────────────────┐        ┌──────────────────┐
   │ ADDED VOLTAGE V+ │        │ ADDED VOLTAGE V+ │
   │ DECREASED        │        │ INCREASED        │
   └──────────────────┘        └──────────────────┘

              ┌────────────────┐
              │ Vo=Vo+(V+)     │──S12
              └────────────────┘

                 ◇ V+≧ΔVolim ◇──S15
                 N │        Y │

                                    S16
                          ┌────────────────────┐
                          │ DECELERATION STOP   │
                          │ FLAG LI=ON          │
                          └────────────────────┘

   ┌─────────────────────┐
   │ DECELERATION STOP   │──S18
   │ FLAG LI=OFF         │
   └─────────────────────┘

       ┌──────────────────┐
       │ PWM CALCURATION  │──S13
       └──────────────────┘

           ┌──────────┐
           │ OUTPUT   │──S14
           └──────────┘

             ◇ LI=ON ◇──S17
           Y │      N │
```

13

# F I G . 6

**EP 2 506 423 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7007981 A

- JP 7267525 A